# EUROPEAN PATENT SPECIFICATION

(11) **EP 3 150 999 B1**
(45) Date of publication and mention of the grant of the patent: **13.12.2017**
(21) Application number: 15187999.6
(22) Date of filing: 01.10.2015
(51) Int. Cl.: G01N 27/12, G01N 27/22

(54) **RELATIVE HUMIDITY SENSOR AND METHOD OF FORMING RELATIVE HUMIDITY SENSOR**
RELATIVER FEUCHTIGKEITSSENSOR UND VERFAHREN ZUR HERSTELLUNG EINES RELATIVEN FEUCHTIGKEITSSENSORS
CAPTEUR D'HUMIDITÉ RELATIVE ET PROCÉDÉ DE FABRICATION D'UN CAPTEUR D'HUMIDITÉ RELATIVE

(43) Date of publication of application: 05.04.2017
(73) Proprietor: Honeywell International Inc., Morris Plains, NJ 07950 (US)
(72) Inventor: SERBAN, Bogdan-Catalin, Morris Plains, NJ New Jersey 07950 (US); DUMITRU, Viorel Georgel, Morris Plains, NJ New Jersey 07950 (US); BUIU, Octavian, Morris Plains, NJ New Jersey 07950 (US); BREZEANU, Mihai, Morris Plains, NJ New Jersey 07950 (US)
(74) Representative: Houghton, Mark Phillip

(56) References cited:
- EP-A1- 2 009 432
- JP-A- 2002 265 781
- US-A- 5 417 100
- US-A- 5 607 573
- US-A1- 2005 131 139

## Description

### BACKGROUND

Humidity sensors, e.g., relative humidity sensors, can be used in various domestic and industrial environments. For example, relative humidity sensors can be used for control of the living environment in buildings, textiles and paper manufacturing, food processing, the medical field, the automotive industry, pharmaceutical processing, agriculture, and chemical gas purification, among others.

Patent document number EP2009432A1 describes an electrical time and humidity or moisture sensor incorporated in a package or packaging material of goods, particularly electronics, foodstuffs and degradable products. The sensor comprises a layered structure that is based on a conductive polymer and it indicates whether the package or packaging material has been exposed to humid or moist environment after activation of the sensor.

Patent document number US5417100A describes a sensor for detecting volatile hydrocarbons and other solvent vapors detects, which leaks in the fittings and valves of petroleum refineries and chemical manufacturing and processing plants. The sensor comprises: a dielectric substrate having a major surface; a pair of interdigitated, electrically conductive electrodes disposed on the major surface of the substrate; and, a composite coating covering the interdigitated electrodes and comprising a conductive polymer, and a dielectric polymer with an affinity for the solvent vapors to be detected.

Patent document number JP2002-265781A describes a process for preparing a polyaniline soluble to water and organic solvents in a highly electrically conductive state. The preparation process comprises steps wherein a polyaniline or its derivative is mixed and dispersed with a copolymer having, within the molecule, a segment containing a group reactive with the polyaniline or its derivative and a segment having at least one structure selected from the group consisting of structures of polyalkylene glycols, polystyrene derivatives, poly(meth)acrylic acid derivatives, poly(meth)acrylonitrile derivatives and polyethers.

### SUMMARY

The present invention in its various aspects is as set out in the appended claims.

A relative humidity sensor is disclosed. The relative humidity sensor includes a first electrode and a second electrode disposed above a dielectric substrate, a sensitive layer disposed above the first electrode and the second electrode, the sensitive layer formed from a composition including a doped conductive polymer. The doped conductive polymer is a calconcarboxylic acid doped polyaniline.

The method of forming a relative humidity sensor includes preparing a composition, the composition a calconcarboxylic acid doped polyaniline, and depositing at least a portion of the composition on a dielectric substrate supporting a first electrode and a second electrode to form the relative humidity sensor.

Examples of the present disclosure provide a relative humidity sensor configured to detect the presence of relative humidity by an increase in conductance of a sensitive layer placed between two metal electrodes.

Example 1 includes subject matter directed toward a relative humidity sensor, comprising a first electrode and a second electrode disposed above a dielectric substrate; a sensitive layer disposed above the first electrode and the second electrode, the sensitive layer is formed from a doped conductive polymer, wherein the doped conductive polymer is a reaction product of a polyaniline and calconcarboxylic acid.

In Example 2, the subject matter of Example 1 is configured where the doped conductive polymer is a reaction product of a polyaniline and calconcarboxylic acid

In Example 3, the subject matter of Examples 1 or 2 can be optionally configured where the polyaniline is an emeraldine base.

In Example 4, the subject matter of Examples 1-3 is configured where the doped conductive polymer is a calconcarboxylic acid doped polyaniline.

In Example 5, the subject matter of Examples 1-4 can be optionally configured where the doped conductive polymer is calconcarboxylic acid doped polyaniline nanofibers.

In Example 6, the subject matter of Examples 1-5 can be optionally configured where the doped conductive polymer nanofibers have a length of 50 nanometers to 100 nanometers.

In Example 7, the subject matter of Examples 1-6 can be optionally configured where the first electrode and the second electrode are in the same plane and the sensitive layer is disposed above the first electrode and the second electrode.

In Example 8, the subject matter of Examples 1-7 can be optionally configured where the first electrode and the second electrode are interdigitated and the sensitive layer is disposed above the first electrode and the second electrode.

Example 9 includes subject matter directed towards a method of forming a relative humidity sensor, the method comprising preparing a composition, the composition formed from a calconcarboxylic acid doped polyaniline; and depositing at least a portion of the composition on a dielectric substrate supporting a first electrode and a second electrode to form the relative humidity sensor

In Example 10, the subject matter of Examples 1-9 can be optionally configured to include forming the calconcarboxylic acid doped polyaniline, including: preparing a first mixture of calconcarboxylic acid and polyaniline, mechanically blending the first mixture for a first time period, and heating the mixture at a first temperature for a second time period.

In Example 11, the subject matter of Examples 1-10 can be optionally configured to include forming the polyaniline, including one of: oxidizing aniline with ammonium peroxodisulphate; and forming polyaniline via interfacial polymerization.

In Example 12, the subject matter of Examples 1-11 can be optionally configured to include depositing the first electrode and the second electrode on the dielectric substrate; applying the composition to an upper surface of the first electrode and the second electrode; and drying the composition to form the sensitive layer formed from only the calconcarboxylic acid doped polyaniline.

In Example 13, the subject matter of Examples 1-12 can be optionally configured where depositing the first electrode and the second electrode includes depositing the first electrode and the second electrode in the same plane

In Example 14, the subject matter of Examples 1-13 can be optionally configured where depositing the first electrode and the second electrode includes depositing the first electrode and the second electrode such that the first electrode and the second electrode are interdigitated.

In Example 15, the subject matter of Examples 1-14 can be optionally configured where the calconcarboxylic acid doped polyaniline is calconcarboxylic acid doped polyaniline nanofibers.

### DETAILED DESCRIPTION OF THE DRAWINGS

The embodiments of the present disclosure will be described, by way of example only, by reference to the FIGS. 1-5 of the accompanying drawing in which:
FIG. 1 shows a schematic view of a relative humidity sensor, in accordance with at least one example.
FIG. 2 shows a schematicview of a relative humidity sensor, in accordance with at least one example.
FIG. 3 shows a cross-sectional view of the relative humidity sensor in FIG. 1 along line 3-3, in accordance with at least one example.
FIG. 4 shows a method of forming a relative humidity sensor, in accordance with at least one example.
FIG. 5 is a graph illustrating current changes in a humidity sensor in response to relative humidity changes.

### DETAILED DESCRIPTION

The present disclosure is directed toward a relative humidity sensor and a method for making the relative humidity sensor. The relative humidity sensor incorporates a sensitive layer formed from the doped conductive polymer calconcarboxylic acid doped polyaniline. The relative humidity sensor can, in an example, be formed in an interdigitated configuration. The relative humidity sensor of the present disclosure benefits over previous humidity sensors in that it has a low cost, increase in the ease of manufacturing, and a high sensitivity.

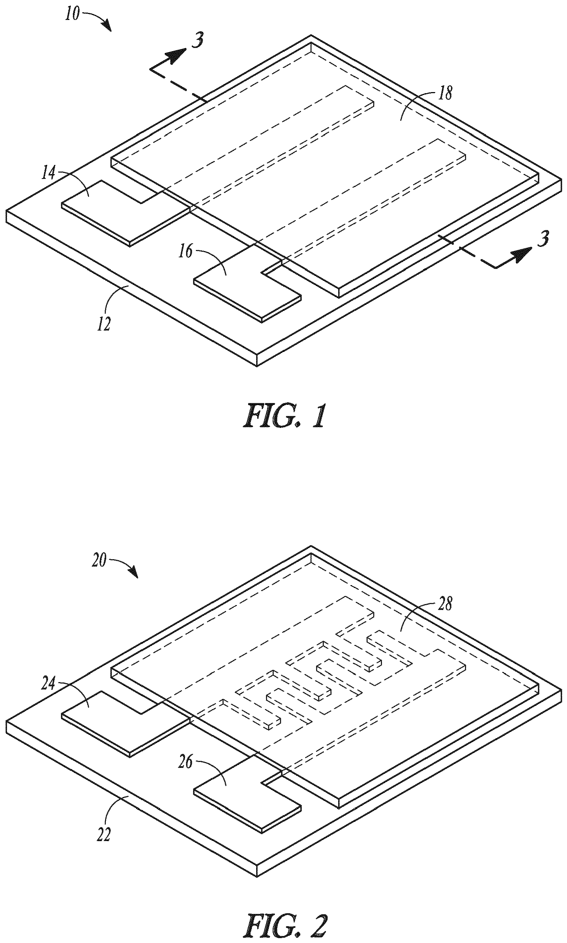

FIG. 1 shows a schematic view of a relative humidity sensor 10 (hereinafter also referred to as "sensor 10"), in accordance with at least one example. The sensor 10 can include a dielectric substrate 12, a first electrode 14, a second electrode 16, and a sensitive layer 18. In an example, the dielectric substrate 12 can be formed of a flexible dielectric material such that the dielectric substrate 12 can conform to non-planar surfaces. In another example, the dielectric substrate 12 is not flexible. The dielectric substrate 12 can be formed from including, but not limited to, plastic such as polyethylene terephthalate (PET) and polycarbonate, glass, composite materials such as FR4 used for Printed Circuit Board (PCB), and semiconductor material wafers such as silicon wafers, among others. The dielectric substrate 12, in an example has a thickness from 50 microns to 5 millimeters microns.

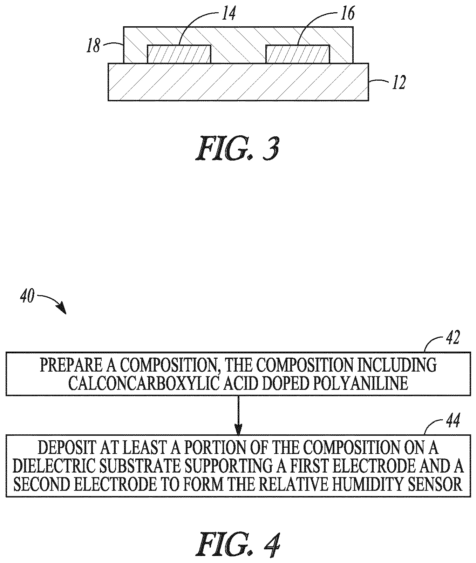

The first and second electrodes 14, 16 can be the same material or can be formed of different materials. In an example, the first and second electrodes 14, 16 can be made from, but not limited to, aluminum, copper, and chromium/aluminum, among others. The first and the second electrodes 14, 16 can be deposited on the surface of the dielectric substrate 12 by using well-known methods like direct printing, evaporation, and sputtering. Also, the first and the second electrodes 14, 16 can be realized on the dielectric substrate 12 covered with a conductive layer such as PCB (e.g., FR4 made board covered with laminated copper) by etching or any other subtractive method. As shown in FIG. 1 the first and second electrodes 14, 16 are planar, linear electrodes. Referring to FIG. 3, which illustrates a cross-section of the humidity sensor 10 in FIG. 1 along lines 3-3, the first and second electrodes 14, 16 are planar and can be substantially parallel to each other.

As shown in FIG. 1, the sensor 1 includes the sensitive layer 18. As discussed herein, the sensitive layer 18 is formed by preparing a composition, the composition formed from a doped conductive polymer. The doped conductive polymer, as discussed herein, can reduce the cost and increase the ease in manufacturing, as well as provide an increase in sensitivity. The sensitive layer 18 can be obtained by drop ink-jet printing or drop casting the composition onto the dielectric substrate 12.

The doped conductive polymer is the reaction product of a conductive polymer and calconcarboxylic acid. In an example, the conductive polymer is an emeraldine base. Various emeraldine bases can be used.

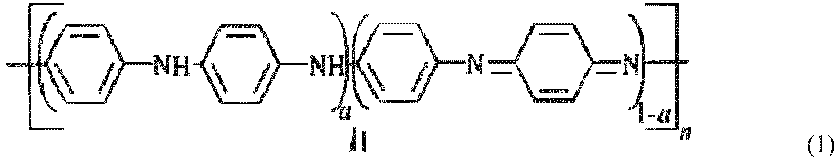

In some examples, the polyaniline (e.g., emeraldine base) can be synthesized by an oxidation reaction using, for example, ammonium peroxidisulphate or hydrogen peroxide, with 2-ethyoxy aniline as the monomer.In another example, the polyaniline can be synthesized by interfacial polymerization, as discussed herein. When the polyaniline is synthesized by interfacial polymerization, the synthesized polyaniline is in the form of nanofibers, which exhibits increased sensitivity for humidity in comparison with traditional polyanilines (e.g., non-nanofiber polyanilines). The polyaniline nanofibers can have a length of from about 50 nanometers to about 100 nanometers.

As discussed herein, the polyaniline is doped with calconcarboxylic acid to form a calconcarboxylic acid doped polyaniline polymer that is used in sensitive layers of a humidity sensor that provides a decrease in the cost, ease of manufacturing, and increased sensitivity. In order to synthesize the calconcarboxylic acid doped polyaniline polymer, the polyaniline (e.g., emeraldine base) can be doped by protonation. Sulfonic groups, which are responsible for the protonation of imine nitrogen atom, are found in calconcarboxylic acid. Calconcarboxylic acid can be represented by formula 2 below:

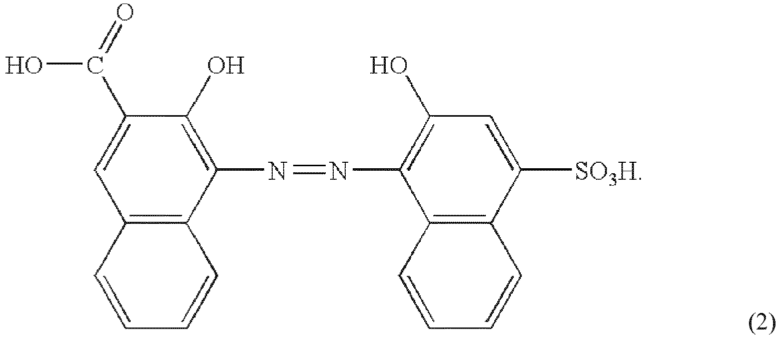

The process of doping the polyaniline is shown below. Formula (1) represents polyaniline and formula 3 represents the calconcarboxylic acid doped polyaniline polymer. 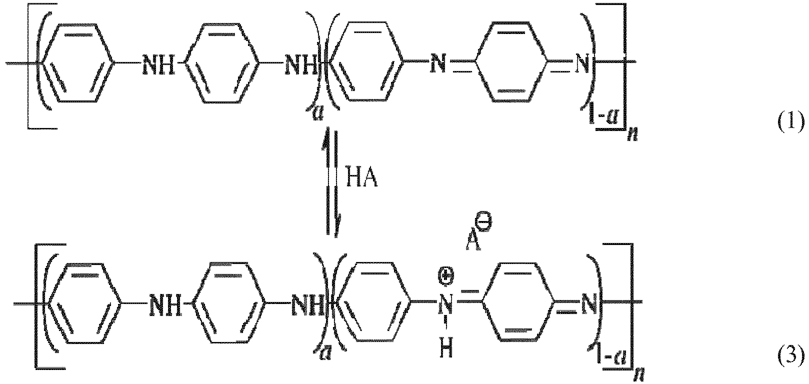 Where HA is the calconcarboxylic acid.

In an example, the calconcarboxylic acid doped polyaniline polymer can be formed by mixing the polyaniline (e.g., emeraldine base) and the calconcarboxylic acid. Mixing can include mechanically mixing where mechanically mixing can include, but is not limited to, pestle and mortar. The calconcarboxylic acid and the polyaniline can be mixed for a time period including 15 minutes to 60 minutes. In an example, the calconcarboxylic acid and the polyaniline can be mixed for 30 minutes. The mixture can be heated to a temperature for a second time period to increase the doping. For example, the mixture can be heated to a temperature of 60 degrees Celsius (°C) to 140 °C such as 80 °C, 100 °C, and 120 °C for 15 minutes to 60 minutes. In an example, the mixture can be heated to 100 °C for 1 hour. In an example, the mixing and heating can overlap. For example, the mixing and heating can occur simultaneously. In other example, the heating can occur after the mixing. In yet another example, the mixing and heating can partially overlap.

Once the calconcarboxylic acid doped polyaniline polymer has been formed, the sensing layer can be formed. A composition including the doped polymer can be formed. For example, the calconcarboxylic acid doped polyaniline polymer can be mixed with a solvent such as dimethylformamide (DMF), N-Methyl-2-pyrrolidone (NMP), or both to form a composition. The composition can be deposited onto the dielectric substrate 12 and subsequently dried to form the sensitivity layer 18. In an example, the sensitive layer 18 is formed of only the calconcarboxylic acid doped polyaniline polymer. That is, the sensitive layer 18 includes 100 % calconcarboxylic acid doped polyaniline polymer. FIG. 2 shows a schemiatic view of a relative humidity sensor 20 (hereinafter also referred to as "sensor 20"), in accordance with at least one example. The sensor 20 is similar to sensor 10 as described in relation to FIG. 1, but illustrates an interdigitated electrode configuration.For example, the sensor 20 can include a dielectric substrate 22, similar to the dielectric substrate 12 described in relation to FIG. 1.

As shown in the example of FIG. 2, the sensor 20 can include interdigitated electrodes (IDEs), including the first electrode 24 and the second electrode 26, both of which are supported by the dielectric substrate 22. The IDEs 24, 26 can be supported by the dielectric substrate 22 such as be depositing the IDEs 24, 26 on a surface of the dielectric substrate, as described herein.The first and second electrodes 24, 26 can include two individually addressable interdigitated comb-like electrode structures. In an example, the first and second electrodes 24, 26 can be direct printed on the dielectric substrate 12. The first and second electrodes 24, 26 can include the same materials as the first and second electrodes 4, 6 described in relation to sensor 10 of FIG. 1.

As shown in FIG. 2, the sensor 20 can include a sensitive layer 28 configured to detect humidity of the environment in which the sensor 20 is located. That is, the sensitive layer 28 can be in electrical contact with the IDEs, such that electric properties of the sensor 20 can vary based on the interaction between the sensitive layer 28 and the first and second electrodes 24, 26. The sensitive layer 28 can be formed of the composition of the doped polymer, as discussed herein. The interdigitated electrodes, the first electrode 24 and the second electrode 26, can be deposited on the dielectric substrate 22, such as by a direct printing method. In an example, the sensitive layer 28 can be deposited on the IDEs so as to encompass the first and second electrodes 24, 26 and form a thin layer above the IDEs 14A, 14B.

FIG. 4 illustrates a method 40 of forming a humidity sensor, in accordance with at least one example. At 42, the method includes preparing a composition including a calconcarboxylic acid doped polyaniline polymer. The composition prepared at 42 can be prepared by any method described herein, such as in relation to FIGS. 1-3 and can include calconcarboxylic acid doped polyaniline polymer nanofibers. At 44, the method 50 can include depositing at least a portion of the composition on a dielectric substrate supporting a first electrode and a second electrode, wherein the first and the second electrode could be linear (shown in FIG. 1) or interdigitated (shown in FIG. 2), to form the relative humidity sensor.

### Examples

The following examples are given to illustrate, but not limit, the scope of this disclosure.

### Test Methods

The sensitive layer humidity detection capability was investigated by applying a voltage between the two electrodes and measuring the electrical current flowing through the sensitive layer at various levels of humidity.

### Examples

### Synthesis of Undoped Polyaniline (Free Base)

Aniline was chemically oxidized with ammonium peroxydisulfate. Aniline (18.64 g, 0.2 mol) was dissolved in water (400 ml) to form a mixture. Hydrochloric acid (80 ml; 37.5%) was added to the mixture and stirred in an ice bath for four hours. Ammonium peroxydisulfate (45.6g, 0.2 mol) was added to for a second mixture, which was covered and placed in a refrigerator at 3 °C for eight hours. After the eight hours, the second mixture was diluted in water, and the polyaniline precipitate was filtered, washed with 2L of deionized water, washed againwith a solution of ammonium hydroxide (30%) and washed a second time with deionized water. The collected powder was dried in an oven, at 90 °C, for eight hours.

### Synthesis of Undoped Polyaniline (Free Base) Nanofibers

The polyaniline nanofibers were formed via interfacial polymerization. Two solutions were formed. A first solution including 40 mL of hydrochloric acid (1M) and 8 mmole ammoniuim persulfate was formed and a second solution including 40 mL chloroform and 8 mmole 2-ethoxy aniline was formed. Each solution was stirred with a mechanical stirrer for two hours. The first solution was slowly transferred to 2-methoxyanilne (the second solution). The polyaniline was synthesized at the interface of the immiscible solutions. The polyaniline nanofibers were filtered and dried at room temperature for 20 hours.

### Formation of calconcarboxylic acid doped polyaniline nanofibers

The synthesized polyaniline nanofibers (10 g) were mechanically mixed with calconarboxylic acid (5g) for 30 minutes to form the calconcarboxylic acid doped polyaniline nanofibers. During the mechanical mixing, the mixture was heated to 100 °C.

### Formation of humidity sensor

The calconcarboxylic acid doped polyaniline nanofibers were mixed with 100 microliters of DMF to form a mixture. The mixture was deposited onto electrodes that had been previously realized onto a dielectric substrate. The composition was deposited via drop casting. The composition was then dried in air at 90 °C for 30 minutes to form a sensitivity layer of the humidity sensor.

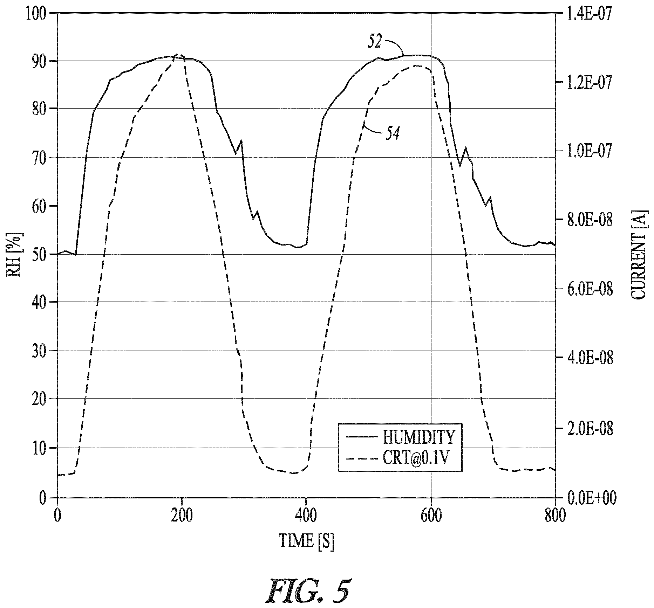

The sensitivity of the humidity sensor was tested by measuring the current, as described above, through the humidity sensor in response to changing humidity. The results are shown in FIG. 5.

### Results

FIG. 5 shows the changing current of the humidity sensor in response to the changing relative humidity. The relative humidity (RH) percentage is on the left y-axis, the current of the humidity sensor is on the right y-axis, and the time is on the x-axis. As shown in FIG. 5, the response of the humidity sensor to changes in relative humidity is very fast, e.g., the current (shown as line 54) through the humidity sensor changes almost simultaneously after the relative humidity changes (shown as line 52). As shown in FIGS. 5 as the relative humidity increases, so does the current across the humidity sensor.

The calconcarboxylic acid doped polyaniline polymer absorbs water and the changed geometry of the polymer increases the charge transfer across the polymer chain.

### Additional Notes

The above Detailed Description is intended to be illustrative, and not restrictive. For example, the above-described examples or one or more elements thereof may be used in combination with each other. Other embodiments may be used, such as by one of ordinary skill in the art upon reviewing the above description. In addition, various features or elements may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

In this document, the terms "a" or "an" are used to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the phrase "varus/valgus angle" is used to refer to a varus angle only, a valgus angle only, or both a varus angle and a valgus angle.

In the appended claims, the terms "including" and "in which" are used as the plain-English equivalents of the respective terms "comprising" and "wherein." The terms "including" and "comprising" are open-ended, that is, a system or method that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

## Claims

1. A relative humidity sensor (10), comprising:
a first electrode (14) and a second electrode (16) disposed above a dielectric substrate (12);
a sensitive layer (18) disposed above the first electrode and the second electrode, the sensitive layer (18) is formed from a doped conductive polymer, wherein the doped conductive polymer is a reaction product of a polyaniline and calconcarboxylic acid.

2. The relative humidity sensor of claim 1, wherein the polyaniline is an emeraldine base.

3. The relative humidity sensor of claim 1, wherein the doped conductive polymer is a calconcarboxylic acid doped polyaniline.

4. The relative humidity sensor of claim 1, wherein the doped conductive polymer is calconcarboxylic acid doped polyaniline nanofibers.

5. The relative humidity sensor of claim 4, wherein the doped conductive polymer nanofibers have a length of 50 nanometers to 100 nanometers.

6. The relative humidity sensor of claim 1, wherein the first electrode (14) and the second electrode (16) are in the same plane and the sensitive layer (18) is disposed above the first electrode and the second electrode.

7. The relative humidity sensor of claim 1, wherein the first electrode (14) and the second electrode (16) are interdigitated and the sensitive layer (18) is disposed above the first electrode and the second electrode.

8. A method of forming a relative humidity sensor, the method comprising:
preparing a composition, the composition formed from a calconcarboxylic acid doped polyaniline; and
depositing at least a portion of the composition on a dielectric substrate (12) supporting a first electrode (14) and a second electrode (16) to form the relative humidity sensor (10).

9. The method of claim 8, further including
forming the calconcarboxylic acid doped polyaniline, including:
preparing a first mixture of calconcarboxylic acid and polyaniline, mechanically blending the first mixture for a first time period, and heating the mixture at a first temperature for a second time period.

10. The method of claim 8, further including:
forming the polyaniline, including one of:
oxidizing aniline with ammonium peroxodisulphate; and
forming polyaniline via interfacial polymerization.

11. The method of claim 8, further including:
depositing the first electrode (14) and the second electrode (16) on the dielectric substrate (12);
applying the composition to an upper surface of the first electrode (14) and the second electrode (16); and
drying the composition to form the sensitive layer (18) formed from only the calconcarboxylic acid doped polyaniline .

12. The method of claim 11, wherein depositing the first electrode (14) and the second electrode (16) includes:
depositing the first electrode (14) and the second electrode (16) in the same plane.

13. The method of claim 11, wherein depositing the first electrode (14) and the second electrode (16) includes:
depositing the first electrode (14) and the second electrode (16) such that the first electrode (14) and the second electrode (16) are interdigitated.

14. The method of claim 8, wherein the calconcarboxylic acid doped polyaniline is calconcarboxylic acid doped polyaniline nanofibers.

## Patentansprüche

1. Sensor für relative Feuchtigkeit (10), umfassend:
eine erste Elektrode (14) und eine zweite Elektrode (16), die über einem dielektrischen Substrat (12) angeordnet sind;
eine empfindliche Schicht (18), die über der ersten Elektrode und der zweiten Elektrode angeordnet ist, wobei die empfindliche Schicht (18) aus einem dotierten leitfähigen Polymer besteht, wobei das dotierte leitfähige Polymer ein Reaktionsprodukt von einem Polyanilin und Calconcarbonsäure ist.

2. Sensor für relative Feuchtigkeit gemäß Anspruch 1, wobei das Polyanilin eine Emeraldinbase ist.

3. Sensor für relative Feuchtigkeit gemäß Anspruch 1, wobei das dotierte leitfähige Polymer ein Calconcarbonsäure-dotiertes Polyanilin ist.

4. Sensor für relative Feuchtigkeit gemäß Anspruch 1, wobei das dotierte leitfähige Polymer Calconcarbonsäure-dotierte Polyanilin-Nanofasern sind.

5. Sensor für relative Feuchtigkeit gemäß Anspruch 4, wobei die dotierten leitfähigen Polymer-Nanofasern eine Länge von 50 Nanometer bis 100 Nanometer aufweisen.

6. Sensor für relative Feuchtigkeit gemäß Anspruch 1, wobei die erste Elektrode (14) und die zweite Elektrode (16) in der gleichen Ebene liegen und die empfindliche Schicht (18) über der ersten Elektrode und der zweiten Elektrode angeordnet ist.

7. Sensor für relative Feuchtigkeit gemäß Anspruch 1, wobei die erste Elektrode (14) und die zweite Elektrode (16) ineinandergreifen und die empfindliche Schicht (18) über der ersten Elektrode und der zweiten Elektrode angeordnet ist.

8. Verfahren zum Herstellen eines Sensors für relative Feuchtigkeit, wobei das Verfahren umfasst:
Herstellen einer Zusammensetzung, wobei die Zusammensetzung aus einem Calconcarbonsäure-dotierten Polyanilin besteht; und
Aufbringen wenigstens eines Teils der Zusammensetzung auf ein dielektrisches Substrat (12), das eine erste Elektrode (14) und eine zweite Elektrode (16) trägt, um den Sensor für relative Feuchtigkeit (10) zu bilden.

9. Verfahren gemäß Anspruch 8, ferner umfassend:
Herstellen des Calconcarbonsäure-dotierten Polyanilins, umfassend:
Herstellen eines ersten Gemischs von Calconcarbonsäure und Polyanilin,
mechanisches Mischen des ersten Gemischs für eine erste Zeitdauer und Erhitzen des Gemischs auf eine erste Temperatur für eine zweite Zeitdauer.

10. Verfahren gemäß Anspruch 8, ferner umfassend:
Herstellen des Polanilins, umfassend eines von:
Oxidieren von Anilin mit Ammoniumperoxodisulfat; und
Herstellen von Polyanilin über Grenzflächenpolymerisation.

11. Verfahren gemäß Anspruch 8, ferner umfassend
Aufbringen der ersten Elektrode (14) und der zweiten Elektrode (16) auf das dielektrische Substrat (12);
Aufbringen der Zusammensetzung auf eine obere Oberfläche der ersten Elektrode (14) und der zweiten Elektrode (16); und
Trocknen der Zusammensetzung, um die empfindliche Schicht (18) zu bilden, die nur aus dem Calconcarbonsäure-dotierten Polyanilin besteht.

12. Verfahren gemäß Anspruch 11, wobei das Aufbringen der ersten Elektrode (14) und der zweiten Elektrode (16) umfasst:
Aufbringen der ersten Elektrode (14) und der zweiten Elektrode (16) in der gleichen Ebene.

13. Verfahren gemäß Anspruch 11, wobei das Aufbringen der ersten Elektrode (14) und der zweiten Elektrode (16) umfasst:
Aufbringen der ersten Elektrode (14) und der zweiten Elektrode (16) derart, dass die erste Elektrode (14) und die zweite Elektrode (16) ineinandergreifen.

14. Verfahren gemäß Anspruch 8, wobei das Calconcarbonsäure-dotierte Polyanilin Calconcarbonsäure-dotierte Polyanilin-Nanofasern sind.

## Revendications

1. Capteur d'humidité relative (10), comprenant :
une première électrode (14) et une deuxième électrode (16) disposées au-dessus d'un substrat diélectrique (12) ;
une couche sensible (18) disposée au-dessus de la première électrode et la deuxième électrode, la couche sensible (18) étant formée à partir d'un polymère conducteur dopé, le polymère conducteur dopé étant un produit de réaction d'une polyaniline et de l'acide calconcarboxylique.

2. Capteur d'humidité relative de la revendication 1, dans lequel la polyaniline est une base éméraldine.

3. Capteur d'humidité relative de la revendication 1, dans lequel le polymère conducteur dopé est une polyalinine dopée à l'acide calconcarboxylique.

4. Capteur d'humidité relative de la revendication 1, dans lequel le polymère conducteur dopé consiste en des nanofibres de polyalinine dopée à l'acide calconcarboxylique.

5. Capteur d'humidité relative de la revendication 4, dans lequel les nanofibres de polymère conducteur dopé ont une longueur de 50 nanomètres à 100 nanomètres.

6. Capteur d'humidité relative de la revendication 1, dans lequel la première électrode (14) et la deuxième électrode (16) sont dans le même plan et la couche sensible (18) est disposée au-dessus de la première électrode et la deuxième électrode.

7. Capteur d'humidité relative de la revendication 1, dans lequel la première électrode (14) et la deuxième électrode (16) sont interdigitées et la couche sensible (18) est disposée au-dessus de la première électrode et la deuxième électrode.

8. Procédé de formation d'un capteur d'humidité relative, le procédé comprenant :
la préparation d'une composition, la composition étant formée à partir d'une polyaniline dopée à l'acide calconcarboxylique ; et
le dépôt d'au moins une partie de la composition sur un substrat diélectrique (12) supportant une première électrode (14) et une deuxième électrode (16) pour former le capteur d'humidité relative (10).

9. Procédé de la revendication 8, comportant en outre
la formation de la polyaniline dopée à l'acide calconcarboxylique, comportant :
la préparation d'un premier mélange d'acide calconcarboxylique et de polyaniline, l'homogénéisation mécanique du premier mélange pendant un premier laps de temps, et le chauffage du mélange à une première température pendant un deuxième laps de temps.

10. Procédé de la revendication 8, comportant en outre :
la formation de la polyaniline, comportant :
l'oxydation d'aniline avec du peroxodisulfate d'ammonium ; et
la formation de polyaniline par polymérisation interfaciale.

11. Procédé de la revendication 8, comportant en outre :
le dépôt de la première électrode (14) et la deuxième électrode (16) sur le substrat diélectrique (12) ;
l'application de la composition à une surface supérieure de la première électrode (14) et la deuxième électrode (16) ; et
le séchage de la composition pour former la couche sensible (18) formée uniquement à partir de la polyaniline dopée à l'acide calconcarboxylique.

12. Procédé de la revendication 11, dans lequel le dépôt de la première électrode (14) et la deuxième électrode (16) comporte :
le dépôt de la première électrode (14) et la deuxième électrode (16) dans le même plan.

13. Procédé de la revendication 11, dans lequel le dépôt de la première électrode (14) et la deuxième électrode (16) comporte :
le dépôt de la première électrode (14) et la deuxième électrode (16) de telle sorte que la première électrode (14) et la deuxième électrode (16) soient interdigitées.

14. Procédé de la revendication 8, dans lequel la polyalinine dopée à l'acide calconcarboxylique consiste en des nanofibres de polyalinine dopée à l'acide calconcarboxylique.
